# EUROPEAN PATENT APPLICATION

(11) **EP 2 801 473 A1**
(43) Date of publication of application: **12.11.2014**
(21) Application number: 14165443.4
(22) Date of filing: 22.04.2014
(51) Int. Cl.: B29D 11/00, B29C 43/00, B29K 105/00

(54) **Method for molding a resin optical lens and the optical lens made thereby**

(30) Priority: 07.05.2013 TW 102116292
(71) Applicant: UC Opto-Electronic Co Ltd, Taichung City 406 (TW)
(72) Inventor: Liu, Pei-Hsuan, 406 TAICHUNG CITY (TW); Lo, Yung-Ru, 406 TAICHUNG CITY (TW)
(74) Representative: Brown, Michael Stanley

(57) **Abstract**

A method for molding a resin optical lens and the optical lens made thereby are disclosed. The method includes the following steps:
(1) Preheating the resin,
(2) Dedusting and preheating the mold,
(3) Moulding,
(4) Mold clamping and pressurization,
(5) Cold setting, and
(6) Demoulding.

## Description

### BACKGROUND OF THE INVENTION

### a) Field of the Invention

The present invention relates to an optical lens made of resin, and more particularly to a method for molding a resin optical lens and the optical lens made by that method.

### b) Description of the Prior Art

An optical element such as the optical lens has been used widely in image products for projecting or reading images.

The optical lens is normally made of resin or glass, and in a conventional method for making a resin optical lens, the plastic injection molding technology is utilized to mold resin to obtain the optical lens, wherein a shaping mold is finished to form several mold cavities and a sprue which connects all the mold cavities. In addition, the shaping mold is preheated to a working temperature and grains of resin are heated to a molten state before being injected by pressure into the shaping mold from an injection inlet of the shaping mold, allowing the molten resin to be filled into the mold cavities via the sprue. Next, the shaping mold is cooled down, cold setting the resin in the mold cavities into the optical lenses. Finally, the optical lenses are taken out of the mold cavities and finished into the products that can be installed onto all kinds of image equipment.

In the method for making an optical lens with the injection molding technology, a nozzle is formed at a place where the mold sprue is connected with the mold cavity. Due to the optical performance on the surface of a resin optical lens, the nozzle can be only provided at a side of the optical lens. While the resin is filled laterally into the mold cavity from the nozzle through the sprue, the resin that is first filled into the cavity and touches the surface of the mold cavity will begin to be cooled down and solidified. However, the resin that enters into the mold cavity at a later time will be filled into the mold cavity in succession until the mold cavity is full. At this time, the resin on the surface of the mold cavity and the resin in the mold cavity will be at a different temperature. After that, the injection molding equipment will be applied with a saturated pressure to mold the resin into an optical lens. Accordingly, a shear stress which is hard to control will be formed between the resin on the surface of the mold cavity and the resin in the mold cavity. In addition, as the side of the mold cavity is pressurized, an internal pressure of the optical lens in proximity to the nozzle will be the largest and will be reduced for the part of the optical lens away from the nozzle, resulting in an unequal shear stress. To control this shear stress, the mold temperature has to be increased and therefore, the time of molding will be longer relatively. The abovementioned shear stress can further affect the reliability of the refractivity of the optical lens.

After heating to be melt down and cold setting, the resin material that is used to make the optical lens cannot be recycled again to be used for making the optical lens. Therefore, for the prior art that molds the resin optical lens with the injection molding technology, the resin in the sprue cannot be fully used to mold the optical lens, which is not beneficial to the utilization of resin. Furthermore, the optical lens that is made of resin must have an excellent weatherability and light transmittancy and a low water absorbency, which increases the price of the resin material used for making the optical lens. The utilization of the resin material directly affects the manufacturing cost of the resin optical lens and the abovementioned prior art will result in a higher manufacturing cost to the resin optical lens.

### SUMMARY OF THE INVENTION

The primary object of the present invention is to provide a method for molding a resin optical lens, wherein an originated hot press molding process is used to mold the resin optical lens, thereby improving the reliability of the refractivity of the optical lens and solving the issue of the conventional method for molding the resin optical lens that the refractivity of the optical lens made thereby can be deviated easily.

Another object of the present invention is to provide a resin optical lens which is made by the abovementioned method for molding the resin optical lens.

To achieve the expected objects, the method for molding a resin optical lens, according to the present invention, includes following steps:

### (1) Preheating the resin

The grains of optical resin are heated up to a preheating temperature PHT1 to approach a molten and softened state, with that the molten and softened resin grains are controlled properly at a fixed amount and shape.

### (2)Dedusting and preheating the mold

Several molds are heated up. Each mold is formed by a lower die and an upper die, and a chamber is formed between the upper die and the lower die to mold an optical lens. When the mold is opened, the upper die and the lower die are controlled to form a clean and dry area, and the surfaces of the upper die and the lower die are heated up by thermal radiation to a molding temperature PHT2 which is larger than PHT1.

### (3) Moulding

The softened resin grains at a fixed amount and preheated to PHT1 are put into the chamber of the lower die of the mold in succession.

### (4) Mold clamping and pressurization

The upper die and the lower die are clamped together to heat up and pressurize vertically the resin grains in the chamber, allowing the resin grains to be heated up to the molten state and to be filled into the chamber.

### (5) Cold setting

The mold is cooled down to cold set the molten resin in the chamber as an optical lens.

### (6) Demoulding

The upper die is separated from the lower die and the optical lens is removed.

According to the abovementioned method for molding a resin optical lens, after executing the demoulding step, the steps of mold dedusting and preheating, moulding, mold clamping and pressurization, cold setting and demoulding are carried out orderly, thereby making the resin optical lens repeatedly and continuously.

The resin optical lens made by the hot press molding is provided with an improved reliability of refractivity.

The molded optical lens of the present invention is made by executing the abovementioned method for molding a resin optical lens.

By the abovementioned method for making a resin optical lens according to the present invention, the reliability of full refractivity of the optical lens made can be controlled, and there is no need to provide the sprue for the shaping mold, thereby improving the utilization of the optical resin material and reducing the manufacturing cost of the resin optical lens.

To enable a further understanding of the said objectives and the technological methods of the invention herein, the brief description of the drawings below is followed by the detailed description of the preferred embodiments.

### BRIEF DESCRIPTION OF THE DRAWINGS

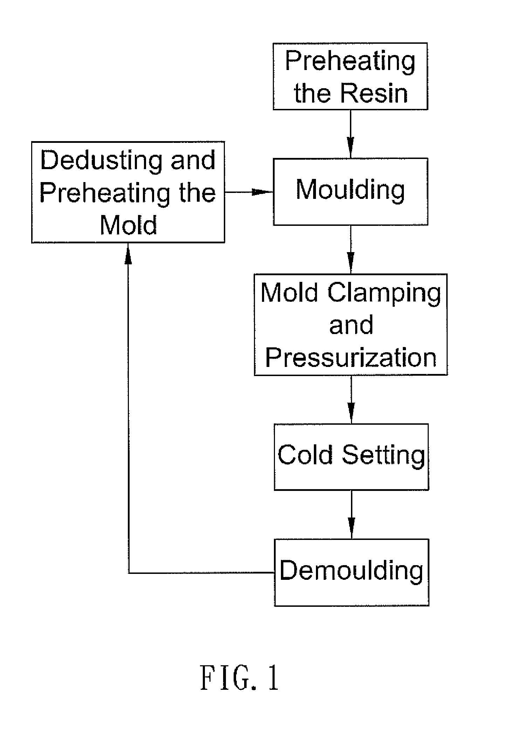

FIG. 1 shows a flow diagram of an embodiment of the present invention.

### DETAILED DESCRIPTION OF THE PREFERRED EMBODIMENTS

Referring to FIG. 1, it shows an embodiment of a method for molding a resin optical lens of the present invention. The method comprises the following steps:

### (1) Preheating the resin

The grains of optical resin are heated up to a preheating temperature PHT1 to approach a molten and softened state, with that the molten and softened resin grains are controlled properly at a fixed amount and shape.

### (2) Dedusting and preheating the mold

Several molds are heated up. Each mold is formed primarily by a lower die and an upper die, and a chamber is formed between the upper die and the lower die to mold an optical lens. When the mold is opened, the upper die and the lower die are controlled to form a clean and dry area, and the surfaces of the upper die and the lower die are heated up by thermal radiation to a molding temperature PHT2 which is larger than PHT1.

### (3) Moulding

The softened resin grains at a fixed amount and preheated to PHT1 are put into the chamber of the lower die of the mold in succession.

### (4) Mold clamping and pressurization

The upper die and the lower die are clamped together to heat up and pressurize vertically the resin grains in the chamber, allowing the resin grains to be heated up to the molten state and to be filled into the chamber.

### (5) Cold setting

The mold is cooled down to cold set the molten resin in the chamber as an optical lens.

### (6) Demoulding

The upper die is separated from the lower die and the optical lens is removed.

After executing the abovementioned demoulding step, the steps of mold dedusting and preheating, moulding, mold clamping and pressurization, cold setting and demoulding are carried out orderly, so that the resin optical lens can be made repeatedly and continuously.

The resin optical lens of the present invention is made by executing the abovementioned method for molding a resin optical lens.

According to the present invention, the resin optical lens is molded by the abovementioned steps. For the resin optical lens made by the hot press molding method, as the resin is at a fixed amount, fixed shape, fixed temperature and is pressurized vertically in the preheated chamber of the mold to form an optical axis of the lens, the resin in the chamber will be at a constant temperature and a constant pressure and the shear stress in the optical lens will be the minimum; therefore, the reliability of full refractivity of the optical lens can be controlled.

Furthermore, by the originated molding method to make a resin optical lens, according to the present invention, there is no need to provide a sprue for the shaping mold as the conventional injection molding tool. Therefore, the utilization of the optical resin used in molding an optical lens can be improved, thereby reducing the manufacturing cost of the resin optical lens.

It is of course to be understood that the embodiment described herein is merely illustrative of the principles of the invention and that a wide variety of modifications thereto may be effected by persons skilled in the art without departing from the spirit and scope of the invention as set forth in the following claims.

## Claims

1. A method for molding a resin optical lens, comprising the following steps:
preheating the resin - the grains of optical resin being heated up to a preheating temperature (PHT1) to approach a molten and softened state, with that the molten and softened resin grains are controlled properly at a fixed amount and shape;
dedusting and preheating the mold - heating up several molds, with that each mold is formed primarily by a lower die and an upper die, and a chamber is formed between the upper die and the lower die to mold an optical lens, whereas when the mold is opened, the upper die and the lower die are controlled to form a clean and dry area, and the surfaces of the upper die and the lower die are heated up by thermal radiation to a molding temperature PHT2 which is larger than PHT1;
moulding -putting the softened resin grains at a fixed amount and preheated to PHT1 into the chamber of the lower die of the mold in succession;
mold clamping and pressurization - clamping the upper die and the lower die together to heat up and pressurize vertically the resin grains in the chamber, allowing the resin grains to be heated up to the molten state and to be filled into the chamber;
cold setting - cooling down the mold to cold set the molten resin in the chamber as an optical lens; and
demoulding - separating the upper die from the lower die and removing the optical lens.

2. The method for molding a resin optical lens according to claim 1, wherein after executing the demoulding step, the steps of mold dedusting and preheating, moulding, mold clamping and pressurization, cold setting and demoulding are carried out orderly, allowing the resin optical lens to be made repeatedly and continuously.

3. The method for molding a resin optical lens according to claim 1, wherein the molding temperature PHT2 is heated by thermal radiation, radiation, convection, or high frequency heating.

4. A resin optical lens which is made by the method for molding a resin optical lens according to claim 1.
